# EUROPEAN PATENT SPECIFICATION

(11) **EP 1 403 630 B1**
(45) Date of publication and mention of the grant of the patent: **12.09.2012**
(21) Application number: 03425633.9
(22) Date of filing: 30.09.2003
(51) Int. Cl.: G01N 3/00

(54) **Device for evaluating resistance to formation of mechanical damages in structural and esthetic elements and use thereof**
Vorrichtung zur Auswertung der Widerstandsfähigkeit von Konstruktionselementen und ästhetischen Elementen gegenüber mechanischen Schäden und Verwendung der Vorrichtung
Dispositif d'évaluation de la résistance à la formation de dommages mécaniques dans des éléments structuraux et esthétiques et utilisation du dispositif

(30) Priority: 30.09.2002 IT rm20020486
(43) Date of publication of application: 31.03.2004
(73) Proprietor: CENTRO SVILUPPO MATERIALI S.p.A., 00129 Roma (IT)
(72) Inventor: Mannucci, Gianluca, Ctro Sviluppo Materiali S.p.A., 00129 Roma RM (IT); Demofonti, Giuseppe, Ctro Sviluppo Materiali S.p.A., 00129 Roma RM (IT); Coppola, Tommaso, Ctro Sviluppo Materiali S.p.A., 00129 Roma RM (IT); Vittori, Osvaldo, Ctro Sviluppo Materiali S.p.A., 00129 Roma RM (IT); Guagnelli, Mauro, Ctro Sviluppo Materiali S.p.A., 00129 Roma RM (IT)
(74) Representative: Di Cerbo, Mario

(56) References cited:
- US-A- 4 506 549
- PATENT ABSTRACTS OF JAPAN vol. 1995, no. 10, 30 November 1995 (1995-11-30) & JP 7 186036 A (NKK CORP), 25 July 1995 (1995-07-25)

## Description

The present invention relates to a device for evaluating the resistance to the formation of mechanical damages, caused by impacting operating means and tools of various type in structural and aesthetical members, for example damages such as perforations, dents and scratches caused by excavating buckets in structural members such as underground or underwater pipelines.

The present invention further relates to a method for using the device mentioned above for evaluating the resistance to the impact of structural members, for example pipelines even possibly under pressure, and aesthetical members, for example continuous façades of buildings.

Hereinafter, members with huge sizes, usually made of metal, prestressed concrete, reinforced cement and the like, which carry out a static structural role, are meant under structural members. For example, it is possible mentioning infrastructure parts, frames, buried, immerged or not ducts, platforms, stocking or landing floors, containers, keels and the like.

Hereinafter, members with medium/huge sizes, usually made of glass, plastic, composite material, metal, concrete and the like, which do not carry out a static structural role, but which must be able to stand exceptional impacts or stresses, are meant under aesthetical members. For example, it is possible mentioning infrastructure parts, frames, continuous façades of buildings/ships/airplanes, deadening panels and the like.

This type of members can be bulky and/or placed in a scarcely controllable position, in particular, for example as it is buried or it is in a hardly accessible position, and therefore they are potentially subjected to accidents wherein an outer operating body (for example operating machine, a ship's anchor, etc) damages the member in question.

For example, in the duct field, a tool such as a bucket's tooth, a perforator, a milling machine or a blade could strike a duct, a supporting member or the like, causing a perforation, a dent or a scratch which could diminish the member capability of playing its own structural function. In other cases, the structural member itself could strike a fixed hinder, a sharpened one in case, such as for example a rock.

What is required is to foresee if and how long, after the impacting event, the member is able to continue to carry out its own function in safety.

For example, in the field of buried ducts, it is generally acknowledged that the mechanical damages due to excavators represent in the world one of the main causes of failure in the terrestrial gas pipe network. In fact, due to the impact with the excavating bucket of an excavator, a superficial damage or a perforation may result on the outer surface of the pipeline, involving the structural integrity of the duct.

In case of a perforation, an immediate loss in the pipeline's containment capability is caused and, depending upon the extent of such perforation, consequences upon the capability in transmitting the fluid and upon the integrity of the surrounding environment may arise.

Studies carried out on this type of damages have brought to the development of various models in literature (see for example the works of *British Gas, Gas de France*, etc) capable to foresee the effects of dents and scratches in terms of residual structural integrity of the damaged pipeline.

Notwithstanding the huge quantity of work already performed, in reality few studies have been carried out to connect the excavator's parameters with the process of a damage formation and therefore with the sizes of the dent and the scratch.

In order to fill this gap it is necessary to perform tests in real scale reproducing the demaging process onto the pressurized duct.

The results of such tests are of primary importance for: 1) determining the capability of a preestablished excavator in damaging a given gas-pressurized duct; and 2) providing a numeric model of analytical evaluation of the damage.

The actual excavators are not suitable to be used as "test tools", since the controllability and reproduceability of the test are not satisfactory.

This example can be easily transferred to other fields and to other types of damages. By way of example, one could wish to foresee the resistance of a platform used for the landing of a helicopter, wherein the tool causing the damage could be the ski-type landing gear of the helicopter itself.

US 4,506,949 discloses a device for automatic checking of welds between tubular parts, including a drum moving over rails and bearing a telescopi arm orientable by rotation on its axis.

In JP 07186036A a device is disclosed comprising an articuled mechanical arm; means for driving the mechanica arm according to a horizontal, vertica trajectory or vertica/horizontal combination and adjusting said trajectory and said force.

The technical problem underlying the present invention is to provide an evaluation device allowing to obviate to the drawbacks mentioned with reference to the known art, allowing to obtain concrete and numerous data upon the damages typical for structural and aesthetical members for which one wants to have at disposition also models for foreseeing the effects of said damages.

Such problem is solved by a device for evaluating the resistance to formation of mechanical damages comprising:
an articulated mechanical arm;
means for driving an articulated mechanical arm in an horizontal or vertical trajectory, or vertical/horizontal combination, and qith a predeterminated force and
means for setting, controlling and adjusting said trajectory and said force;
wich is provided with a support for a test structural or aestetical member, with a test tool supported bye the mechanical articulated arm and with means for evaluating the impact between test tool and tract surface of the member tract involved by the contact.

The main advantage of the device according to the present invention lies in the possibility of performing tests with force (both static and dynamic), impact direction and tool features variable upon a wide range of possible impacting objects and of structural and aesthetical members subjected to impact.

For example, in case of pipelines, the device and the use thereof allow obtaining the parameters useful to foresee the in situ behaviour of the pipeline itself in case of mechanical damages caused by excavators.

The present invention will be described hereinafter according to a preferred embodiment thereof, given by way of example and not for limitative purposes by referring to the enclosed drawings, wherein:
* figure 1 shows a perspective view of the evaluation device according to the invention;
* figure 2 shows a side elevational view of the device of figure 1;
* figure 3 shows a perspective view of a detail of the device of figure 1;
* figure 4 shows a block diagram illustrating the operation of the device of figure 1.

A device for evaluating tracts of pipeline under pressure, intended to be buried, is described. The tool therefor this example has been devised is the tooth of an excavating bucket. However, it is to be meant that, under the word "tool", any object able to cause a mechanical damage in any structural member, for example, drills, buckets without teeth, milling machines or mechanical plows, blades, stones will be meant. Furthermore, it could be also wished to be able to simulate the static interference with objects so as to cause damages, for example the damage caused by resting pipelines upon rocks' pointed crests, underground metallic bases, etc.

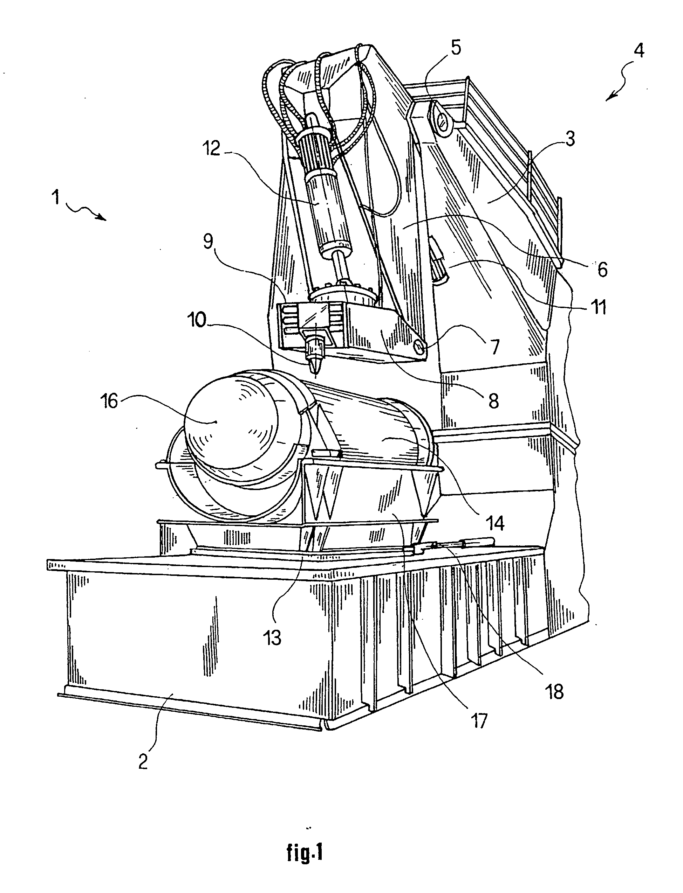

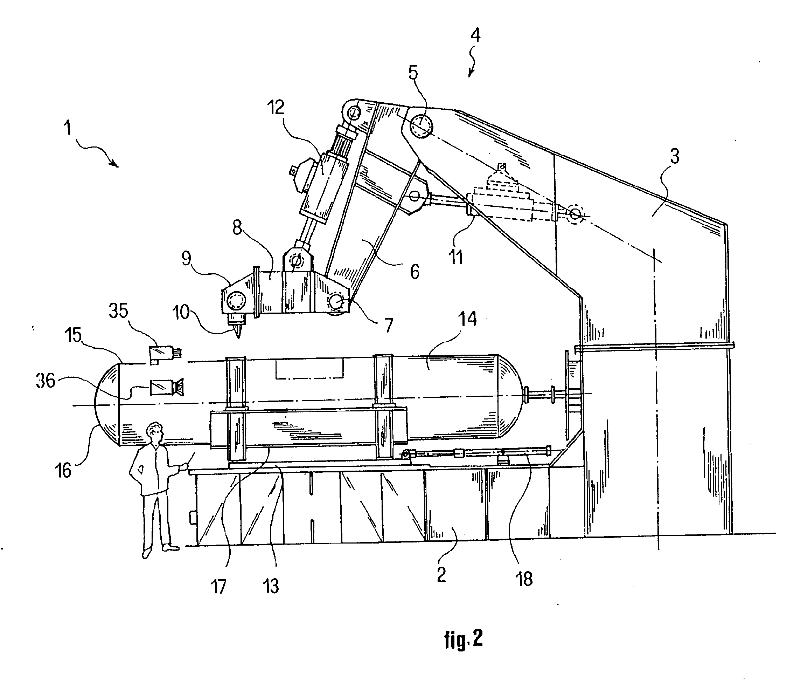

By referring to figures 1 and 2, a device for evaluating the resistance to formation of mechanical damages is designated as a whole with 1.

It comprises a base 2 thereto a first fixed member 3 is fastened, with an articulated mechanical arm 4 which comprises, at the end of the first member 3 opposite to the base 2, a first hinge 5 connected to a second revolving member 6 in turn equipped with a second hinge 7 connected to a third revolving member 8.

By effect of said revolving members 6, 8 the articulated mechanical arm 4 is movable on a working plane, identifiable in the plane of figure 2.

The third member 8 is connected to a tool-holding striking head 9 which will be described in greater detail hereinafter, supporting a test tool 10.

The proposed device comprises first means 11, 12 for driving the articulated mechanical arm 4 to move the test tool 10 in a direction with axial component lying on said working plane, with a predetermined force.

In the present embodiment, the first means for driving 11 and 12 comprise two oleodynamic actuators controlled by two electrohydraulic servo controls in closed loop placed in feedback on the position. Such actuating means is placed, the first one 11 between the first fixed member 3 and the second revolving member 6, and the second extensible actuator 12, placed between the second revolving member 6 and the third revolving member 8. The two actuators can be controlled simultaneously and therefore they can reproduce a composite trajectory by describing the motion of an excavator's articulated arm.

The base 2, instead, comprises a revolving supporting table 13, supporting a member tract 14, which is fastened to the table 13 by means of a saddle-like structure 17 which fastens it in a transversal and longitudinal way, in order to simulate for example an underground pipe.

It is to be meant that the saddle-like structure 17, constructed with U-shaped members, will have to be particularly sized depending upon the test member. It will comprise elastomeric supports, not shown, to reproduce the resting conditions in optimum way.

According to different variants, the supporting table 13 could be planned to receive and firmly secure any type of structural or aesthetical member.

In case of tubular member under pressure, the pipe tract 14 comprises at its own ends respective ferrules 15 supporting closing bottoms 16 so as to seal the pipe tract 14.

If the presence of inner pressure is required, the device 1 comprises a first pressurizing central unit, of conventional type and not shown, able to confer to the fluid contained inside the pipe tract 14 a pressure appropriate for carrying out the test, for example 10 MPa. Such fluid can be an incompressible fluid so as make clearly visible possible leaks, that is simple water.

The pressurizing central unit and the means mentioned above for sealing the tube tract 14 represent means for pressurizing the tube tract 14.

The device 1 comprises second means for driving placed between the base 2 and the supporting table 13, so as to make the table able to rotate in a predetermined position, characterized by a precise angulation chosen in advance to perform the test, to simulate the angle between the impacting arm and the test member.

Said second means for driving comprises a third oleodynamic actuator 18 to move horizontally the support table 13 and therefore the test tool. Said actuator is connected to a second pressurizing central unit.

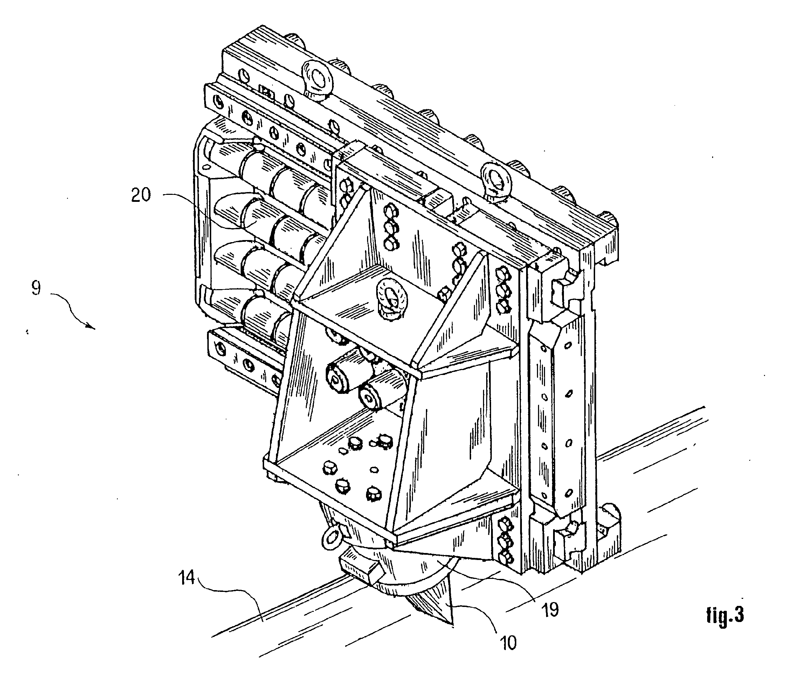

By referring to figure 3, the striking head 9 is described. Such device is provided to be interplaced between the articulated arm 4 and a transducer-holding head 19 thereto the test tool 10 is physically fastened.

The striking head 9 is constructed so as to allow simulating, in case of misaligned impact, with respect to the upper generator of the test tool tract 14, the transversal shifting of the test tool 10 and due, for example, to the excavator's compliance. The system is equipped with inserted guides made of carbonised and rectified steel, with roller-recirculating pads, which allow the transversal sliding of the striking head 9 with respect to the arm 4 minimizing the friction.

The movement is opposed by four groups of springs 20, so as to implement a stiffness for example comparable to the maximum transversal stiffness experimentally found on the excavators. The possibility of eliminating two of the four groups of springs is also provided, in order to implement a stiffness equal to half of the maximum one. The initial misalignment can be adjusted from 0 to 150 mm. The maximum stroke is equal to 275 mm, for a final maximum misalignment of 425 mm.

By means of a sliding pad-brake group with adjustable preload, an initial stroke is implemented without increasing the transversal reaction force, in order to simulate the recovery of the backlashes in the couplings of the excavator's arms. The transversal force can be adjusted in the range 5÷15 kN.

The test tool 10 has a structure so as to imitate the damage caused by an excavator's bucket, it could be a real bucket tooth.

However, it is to be meant that it is possible fastening to the striking head a test tool which reproduces the shape of any object which could strike or however interfere with the structural and or aesthetical member.

The load which causes the damage of the member 14 will thus be applied, according to the present embodiment, by means of said bucket tooth. The applied dynamic or static load is measured by means of a force transducer able to detect the force applied according to 3 orthogonal components; such transducer is positioned between the transducer-holding head 19 and the impacting member 10.

The transducer-holding head 19 is of the type which can be manually adjusted at the beginning of the test by setting the keying angle of the impacting member 10.

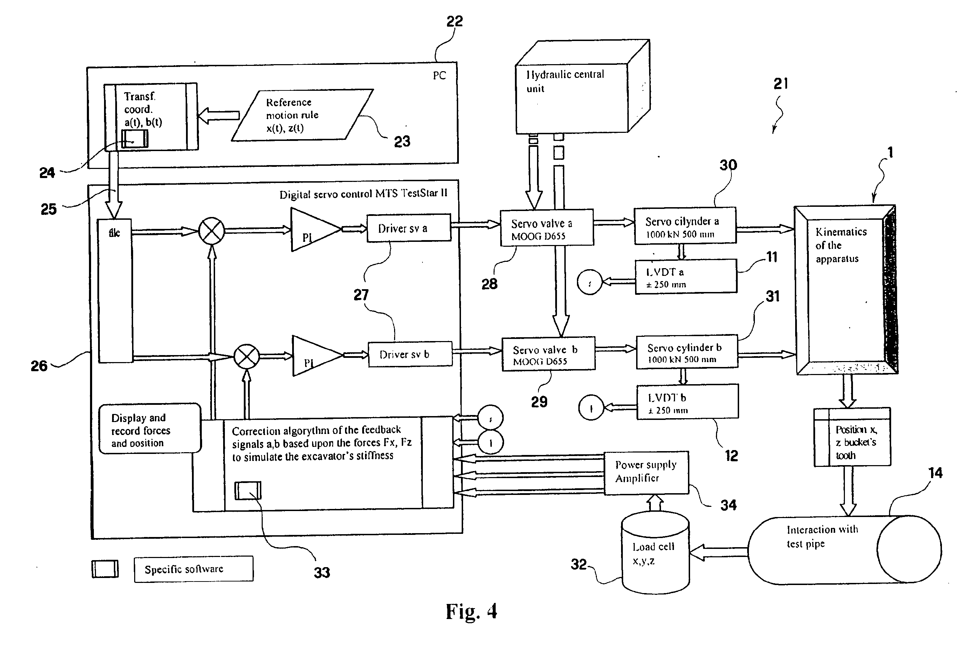

The evaluation device 1 comprises means for adjusting the direction and the force with which the device inflicts blows to the tract of the test member 14, said means being designated as a whole with 21 (figure 4).

Said adjusting means 21 comprises a calculation unit 22 wherein the parameters are inserted, according to which the test tool 10 has to be moved, that is a motion law x(t), z(t) on the plane x, z, designated with 23, whereon the articulated mechanical arm 4 lies.

Based upon a specific software 24, the calculation unit 22 transforms the motion rule 23 of the tool 10 into an operating rule of said first means for driving, that is into operating functions a(t), b(t) 25 for the respective servo commands 11, 12. By acting properly on the springs 20 and on the backlash and on the intensity of the pad brakes existing on the impacting head 9, the head has the possibility of moving in the plane transversal to the impacting plane (plane containing the actuators 11 and 12) implementing a trajectory/rotation in the space.

Said operating functions 25 are transferred into a digital servo-controlling unit 26 which, by means of specific drivers 27, transmits said functions to the servo cylinders 30, 31 powered and controlled by the respective servo valves 28, 29. The set of servo cylinders 30 and 31 and of the respective servo valves constitutes the first means for driving 11 and 12 mentioned above.

As illustrated in figure 4, the action of the servo cylinders 30, 31 translates into a shifting of the impacting member assembled upon the tool-holding head 9, causing an interaction with the tract of the test tool 14.

The shifting signals of each servo cylinder 30 and 31, signals acquired in real time by means of the shifting transducers LVDT positioned upon each of them (figure 4), are processed by the servo-controlling unit 26 in order to guarantee to perform correctly the application of the motion rule 25 by each servo cylinder 30 and 31.

In order to evaluate the effects of the inflicted blow, the above-mentioned transducer of the transducer-holding head 19 is constituted by a load cell 32 able to detect along the three directions, by means of appropriate dynamometric sensors the values of the force associated to said blow, which values, translated by a specific software 33 and by means of an appropriate amplifier 34, are transferred to said servo-controlling unit 26 with a double purpose: displaying and recording the forces and the positions important for the ongoing test and providing feedback signals to simulate correctly the stiffness of the impacting member by means of limitations to the applied force.

The device 1 according to the invention comprises means for evaluating the impact between test tool 10 and surface of the member tract 14 involved by the contact.

Such evaluation means can comprise a videocamera 35 positioned near the member tract 14 (figure 2), for example of the type with high recording speed, to be able to observe the impact, and a three-dimensional detection device, for example of the laser type, able to record the profile of the member damaged after the impact, preferably with a precision of 0,05 mm.

In this way it is possible to gather all information about the dent and the experimental scratch, for subsequent specific analyses.

Subject of the present invention is also a method for evaluating the resistance to formation of mechanical demages by using the device described above, wich is comprised the:
* positioning along the x-axis the tract of the test member 14, guaranteeing an area of superficial continuity of the member, preferably equal to ±600 mm;
* rotating about the vertical z-axis the tract of the member 14 in a range between 0° and 180°, to carry out tests with different related angular position between the axes of the member and of the device 1, in order to perform a complete test programme, a discrete positioning with references for example every 5° will be sufficient;
* rotating the force transducer, so as to vary the impact angle from 0 to 90°; and
* positioning in a misaligned way of the force transducer with respect to the plane of the device 1; the positioning is continuous by fixing a maximum requested misalignment for example of 350 mm on one side only with respect to the axis of the device 1.

Each of the preceding movements will have to provide locking devices, not shown, so as to guarantee the position set for the whole test duration.

The working area will be positioned upon the support table 13 so as to reproduce the real impact conditions.

The maximum speed of the impacting head will be 5 m/s. In the impact point, the slant of the vector speed versus the z-axis will be in the range between 0 and 85°.

By way of example, the maximum static force which the system has to be able to generate in the tooth-pipe contact is 300 kN in the z-direction and 200 kN in the x-direction. Under conditions of dynamic impact, the exerted force could be even greater and it will depend upon the value of the impact speed and upon the possible utilized additional masses. The apparatus, thus, will have to be designed to resist to dynamic stresses up to 500 kN in the z-direction and 200 kN in the two x- and y-directions.

The stiffness of the test system (frame, saddle, arms or portal) will have to be so as to guarantee the test repeatability and however greater than the total stiffness of the "excavating system" determined by the stiffness of the arms and of all structural parts, by the stiffness of the oleodynamic system on board, by the forces' limitation after: intervention of general maximum valves, lifting of the excavator itself, ground compliance under the tracks, etc.

To reproduce the compliance effect of the real system on the test apparatus, a software correction as above described will have to be provided, in real time during the test execution, of the trajectory depending upon the forces arising from the tooth-tube interaction. The correction will have to be parameterized in order to reproduce different types of excavator. The definition of such correction depends upon the availability of experimental data or calculation results related to the above parameters.

The energy of the impact could be varied, being the speed equal, by adding proper masses on the load application device.

The system will have to be able to monitor, to display graphically and numerically and to record the following signals and/or processing of the same:
* three force components in the x, y and z directions (reference system integral to the load cell);
* two positions of the actuators 11, 12;
* three force components in the reference system fixed with respect to the device 1;
* two position components in the x and z directions (reference system fixed with respect to the device 1);
* two speed components in the directions x and z (reference system fixed with respect to the device 1); and
* two acceleration components in the x and z directions (reference system fixed with respect to the device 1).

Based upon the application mode described above, it is possible setting an experimentation to simulate the effects of a real excavator.

The first step of the experimentation will consist in identifying the information necessary to plan the test, for example type and main features of the excavator, excavation modes and relative position between excavator and tube. Such information can be transferred immediately to the evaluation device, also considering that the test tool 10 can be a real tooth of the excavator.

Starting from said information, it is possible planning the test according to the following procedure:
1. based upon the excavator features and upon the excavation modes, identification of a trajectory on the aggression plane x, z to the pipe tract;
2. setting of the maximum static forces which can be foreseen vertically and horizontally as the limit for the maximum vertical and horizontal forces during the scratch formation which is generally associated to the tooth's low speeds in the step of real excavation, such limitations are obtained by means of the cycle for controlling the stiffness of the excavator described previously;
3. determination of the impact speed based upon the combination between the maximum kinetic energy of the dynamic impact and the maximum impact force; and
4. reproduction of the transversal stiffness of the excavator by adjusting the springs 20 on the striking head 9, allowing to implement a serpentine-like scratch wholly similar to the real ones.

Test examples, compared to the real damages caused by an excavator, have brought to the formation of damages very similar to the real ones.

By way of additional example, the structural member to be subjected to test could be a platform used for the landing of helicopters, of the type used on off-shore rigs ships.

In this case, the test tool could be a helicopter's ski-type landing gear which could be driven in different directions, with the typical speeds and force so as to simulate the landing speed and the weight of a helicopter.

Such test could be repeated a number of times sufficient for evaluating the damages inflicted on a platform's selected surface. From this analysis useful data can be obtained for a model of the platform's structural resistance which would allow the replacement thereof before failures or accidents.

To the above mentioned evaluating device and to the related use thereof a person skilled in the art, in order to satisfy additional and contingent needs, could introduce additional modifications and variants, all however comprised within the protective scope of the present inventions, as defined by the enclosed claims.

## Claims

1. A device (1) for evaluating the resistance to the formation of mechanical damages comprising:
an articulated mechanical arm (4);
means (11, 12) for driving an articulated mechanical arm (4) according to a horizontal, vertical trajectory or vertical/horizontal combination, and with a predetermined force; and means (21) for setting, controlling and adjusting said trajectory and said force; **characterized by** the fact of being provided with a support (13) for a structural or aesthetical test member (14), with a test tool (10) supported by the mechanical articulated arm and with means (35, 36) for evaluating the impact between test tool (10) and surface of the member tract (14) involved by the contact.

2. The device (1) according to claim 1, comprising a base (2) thereto is connected to a first fixed member (3) of said articulated mechanical arm (4) which further comprises, at the end of the first member (3) opposite to the base (2), a first hinge (5) connected to a second revolving member (6), in turn equipped with a second hinge (7) connected to a third revolving member (8).

3. The device (1) according to claims 1 and 2, wherein said means for driving comprises a first servo-controlled extensible actuator (11), arranged between the first fixed member (3) and the second revolving member (6), and a second servo-controlled extensible actuator (12), arranged between the second revolving member (6) and the third revolving member (8).

4. The device (1) according to claim 3, wherein said actuators (11,12) are of the type in closed loop placed in feedback on the position.

5. The device according to claim 1, wherein said support comprises a revolving support table (13).

6. The device (1) according to claim 5, wherein said tract of test element (14) is fastened to the support table (13) by means of a resting structure (17) so as to fasten said member in transversal and longitudinal way.

7. The device (1) according to claim 6, wherein said resting structure (17) is equipped with U-shaped members with selected sizes in case the test member (14) is constituted by a pipeline tract.

8. The device (1) according to claim 6, wherein the resting structure (17) comprises elastomeric supports, to reproduce the resting constraint.

9. The device (1) according to claim 1, comprising means (15, 16) for pressurizing the test structural member, in particular a pipeline tract (14).

10. The device (1) according to claim 1, wherein said support (13) can be rotated in a predetermined position.

11. The device (1) according to claim 1, comprising a tool-holding striking head (9) supporting said test tool (10), said striking head (9) having a transducer-holding head (19) thereto the test tool (10) is physically fastened, which has a force transducer with three components (32).

12. The device (1) according to claim 1, comprising a tool-holding striking head (9) supporting said test tool (10), said striking head (9) being slidingly assembled on guides and being equipped with groups of springs (20), so as to allow the transversal motion of said striking head according to a preestablished force-shifting rule depending upon the features and the number of utilized springs.

13. The device (1) according to claim 1, comprising a tool-holding striking head (9) supporting said test tool (10), said striking head (9) having a sliding pad-brake group with adjustable preload, thus implementing an initial stroke without increasing the transversal reaction force.

14. The device (1) according to claim 1, wherein the test tool (10) is chosen in the group comprising: bucket's tooth, perforators' drill, milling machine, blade, sky-type or wheel for helicopter landing gear, rock-like shaped massive member, bumper member.

15. The device (1) according to claim 1, wherein said adjusting means (21) comprises a calculation unit (22) wherein the parameters are inserted according thereto the test tool (10) has to move on the plane of the device (1) and which are transformed into an operating function of said actuation means (11, 12).

16. The device (1) according to claims 11 and 15, wherein said transducer constitutes a load cell (32) able to detect along the three directions, by means of dynamometric sensors, the impact parameters of the test tool (10) which are transferred to a servo-controlling unit (26) in order to display and record the forces and positions important for the ongoing test and in order to provide feedback signals to simulate correctly the stiffness of the impacting member by limitating the applied force.

17. The device (1) according to claim 1, wherein the means for evaluating the impact between test tool (10) and surface of the pipeline tract (14) involved by the impact comprises a videocamera (35) positioned near the pipeline tract (14), in order to be able to record the impact.

18. The device (1) according to claim 1, wherein the means for evaluating the impact between test tool (10) and surface of the test member (14) involved by the impact comprises a device for the three-dimensional detection able to record the profile of the test member subsequently to the impact according to any of the preceding claims.

19. A method for evaluating the resistance to formation of mechanical damages by using the device of claims 1 to 18, which comprises the subsequent steps of:
positioning along an axis (x) a tract of a test member (14), guaranteeing an area of superficial continuity;
rotating around a vertical axis (z) the tract of the test member (14) in a range between 0 DEG and 180 DEG ;
rotating the impact angle between test tool (10) on the tract of the test member (14) between 0 to 90 DEG ; and
possible positioning in a misaligned way of the test tool (10), so as to implement impacts on planes parallel to the aggression plane vertical to the test member (14) plane containing the actuators (11, 12) of the device.

20. The method according to claim 19, wherein the maximum speed of the test tool (10) is at least 5 m/s.

21. The method according to claim 19, wherein the following quantities are monitored:
three force components in the three directions;
two positions of the actuators (11, 12);
three force components in the reference system fixed with respect to the device (1);
two position components on the aggression plane (x, z);
two speed components on the aggression plane (x, z); and
two acceleration components on the aggression plane (x, z).

## Patentansprüche

1. Vorrichtung (1) zum Evaluieren der Widerstandsfähigkeit in Bezug auf mechanische Schäden, umfassend:
einen gelenkigen mechanischen Arm (4);
ein Mittel (11, 12) zum Antreiben eines gelenkigen mechanischen Arms (4) gemäß einer Horizontal-, Vertikal-Trajektorie oder Vertikal/Horizontal-Kombination und mit vorbestimmter Kraft; und ein Mittel (21) zum Einstellen, Steuern und Justieren der Trajektorie und der Kraft; **gekennzeichnet durch** eine Stützeinrichtung (13) für ein strukturelles oder ästhetisches Testteil (14) mit einem Testwerkzeug (10), das **durch** den mechanischen gelenkigen Arm gehalten wird und mit einem Mittel (35, 36) zum Evaluieren des Stoßes zwischen dem Testwerkzeug (10) und einer Oberfläche des Teiltrakts (14), involviert **durch** den Kontakt.

2. Vorrichtung (1) gemäß Anspruch 1, mit einer Basis (2), woran ein erstes fixiertes Teil (3) des gelenkigen mechanischen Arms (4) verbunden ist, wobei ferner an dem Ende des ersten Teils (3) gegenüber der Basis (2) ein erstes Gelenk (5) vorgesehen ist, das verbunden ist mit einem zweiten drehbaren Teil (6), das wiederum ausgestattet ist mit einem zweiten Gelenk (7), das verbunden ist mit einem dritten drehbaren Teil (8).

3. Vorrichtung (1) gemäß Ansprüchen 1 und 2, wobei das Mittel zum Antreiben einen ersten servo-gesteuerten ausfahrbaren Aktuator (11) umfasst, angeordnet zwischen dem ersten fixierten Teil (3) und dem zweiten drehbaren Teil (6), und einen zweiten servo-gesteuerten ausfahrbaren Aktuator (12), angeordnet zwischen dem zweiten drehbaren Teil (6) und dem dritten drehbaren Teil (8).

4. Vorrichtung (1) gemäß Anspruch 3, wobei die Aktuatoren (11, 12) der Art eines geschlossenen Kreislaufs sind, platziert in Rückkopplung an der Position.

5. Vorrichtung gemäß Anspruch 1, wobei die Stützeinrichtung einen drehbaren Stütztisch (13) umfasst.

6. Vorrichtung (1) gemäß Anspruch 5, wobei der Trakt des Testelements (14) an den Stütztisch (13) befestigt wird mittels einer Haltestruktur (17), um das Teil transversal und längs zu befestigen.

7. Vorrichtung (1) gemäß Anspruch 6, wobei die Haltestruktur (17) ausgestattet ist mit U-förmigen Teilen mit ausgewählten Abmessungen für den Fall, dass das Testteil (14) durch einen Pipelinetrakt dargestellt wird.

8. Vorrichtung (1) gemäß Anspruch 6, wobei die Haltestruktur (17) Elastomerstützen umfasst, um den Haltezwang zu reproduzieren.

9. Vorrichtung (1) gemäß Anspruch 1, umfassend ein Mittel (15, 16) zum Drücken des Teststrukturteils, insbesondere einem Pipelinetrakt (14).

10. Vorrichtung (1) gemäß Anspruch 1, wobei die Stützeinrichtung (13) in eine vorbestimmte Position drehbar ist.

11. Vorrichtung (1) gemäß Anspruch 1, umfassend einen Werkzeughalteschlagkopf (9), der das Testwerkzeug (10) trägt, wobei der Schlagkopf (9) einen Transducer-Haltekopf (19) aufweist, woran das Testwerkzeug (10) physisch befestigt wird, aufweisend einen Kraft-Transducer mit drei Komponenten (32).

12. Vorrichtung (1) gemäß Anspruch 1, umfassend einen Werkzeughalteschlagkopf (9), der das Testwerkzeug (10) trägt, wobei der Schlagkopf (9) verschiebbar an Führungen ausgeführt ist und ausgestattet ist mit Gruppen von Federn (20), um die Transversalbewegung des Schlagkopfs gemäß einer vorbestimmten Kraftschaltregel in Abhängigkeit der Merkmale und der Anzahl der verwendeten Federn zu ermöglichen.

13. Vorrichtung (1) gemäß Anspruch 1, umfassend einen Werkzeughalteschlagkopf (9), der das Testwerkzeug (10) trägt, wobei der Schlagkopf (9) eine Gleit-Pad-Brems-Gruppe mit einstellbarer Vorspannung aufweist, wodurch ein Anfangsschub implementierbar ist, ohne Erhöhung der transversalen Reaktionskraft.

14. Vorrichtung (1) gemäß Anspruch 1, wobei das Testwerkzeug (10) ausgewählt wird aus der Gruppe umfassend: Baggerzahn, Perforierbohrer, Fräsmaschine, Klinge, ski-förmiges Helikopterlandefahrwerk oder Rad für Helikopterlandefahrwerk, steinähnlich geformtes Massivteil, Pufferteil.

15. Vorrichtung (1) gemäß Anspruch 1, wobei das einstellbare Mittel (21) eine Recheneinheit (22) umfasst, worin die Parameter eingefügt werden, gemäß derer sich das Testwerkzeug (10) auf der Ebene der Vorrichtung (1) zu bewegen hat und welche transformiert werden in eine Betriebsfunktion der Aktuatormittel (11, 12).

16. Vorrichtung (1) gemäß Ansprüchen 11 und 15, wobei der Transducer eine Messzelle (32) darstellt, die mittels dynamometrischer Sensoren geeignet ist zum Detektieren, entlang der drei Richtungen, der Stoßparameter des Testwerkzeugs (10), welche zu einer Servo-Steuereinheit (26) transferiert werden, um die Kräfte und Positionen, die wichtig sind für den weiteren Test, darzustellen und aufzunehmen, und um Rückkopplungssignale zur Verfügung zu stellen, um die Steifheit des Stoßteils durch Limitieren der angewandten Kraft korrekt zu simulieren.

17. Vorrichtung (1) gemäß Anspruch 1, wobei das Mittel zum Evaluieren des Stoßes zwischen dem Testwerkzeug (10) und einer Oberfläche des Pipelinetrakts (14), involviert durch den Stoß, eine Videokamera (35) umfasst, positioniert nahe dem Pipelinetrakt (14), um in der Lage zu sein, den Stoß aufzunehmen.

18. Vorrichtung (1) gemäß Anspruch 1, wobei das Mittel zum Evaluieren des Stoßes zwischen dem Testwerkzeug (10) und der Oberfläche des Testteils (14), involviert durch den Stoß, eine Vorrichtung für die dreidimensionale Detektion umfasst, geeignet, um das Profil des Testteils nach dem Stoß gemäß einem der vorhergehenden Ansprüche aufzunehmen.

19. Verfahren zum Evaluieren der Widerstandsfähigkeit in Bezug auf mechanische Schäden durch Verwenden der Vorrichtung gemäß Ansprüchen 1 bis 18, welches die nachfolgenden Schritte aufweist:
Positionieren entlang einer Achse (x) eines Trakts eines Testteils (14), garantierend einen Bereich oberflächlicher Kontinuität;
Drehen um eine vertikale Achse (z) des Trakts des Testteils (14) in einem Bereich zwischen 0 Grad und 180 Grad;
Drehen des Stoßwinkels zwischen dem Testwerkzeug (10) auf dem Trakt des Testteils (14) zwischen 0 bis 90 Grad; und mögliches Positionieren in versetzter Weise des Testwerkzeugs (10), um Stöße zu implementieren auf Ebenen parallel zu der Aggressionsebene vertikal zu dem Testteil (14), Ebene enthalten die Aktuatoren (11, 12) der Vorrichtung.

20. Verfahren gemäß Anspruch (19), wobei die Maximalgeschwindigkeit des Testwerkzeugs (10) zumindest 5 m/s beträgt.

21. Verfahren gemäß Anspruch 19, wobei die folgenden Größen überwacht werden:
drei Kraftkomponenten in den drei Richtungen;
zweit Positionen der Aktuatoren (11, 12);
drei Kraftkomponenten in dem Referenzsystem, fixiert in Bezug auf die Vorrichtung (1);
zwei Positionskomponenten auf der Aggressionsebene (x, z);
zwei Geschwindigkeitskomponenten auf der Aggressionsebene (x, z); und
zwei Beschleunigungskomponenten auf der Aggressionsebene (x, z).

## Revendications

1. Dispositif (1) d'évaluation de la résistance à la formation de dommages mécaniques, comprenant :
un bras mécanique articulé (4);
des moyens (11, 12) pour entraîner un bras mécanique articulé (4) selon une trajectoire horizontale, verticale ou une combinaison verticale/horizontale, et avec une force prédéterminée; et des moyens (21) pour régler, commander et ajuster ladite trajectoire et ladite force; **caractérisé en ce que** le dispositif est pourvu d'un support (13) pour un élément de test (14) structurel ou esthétique, d'un outil de test (10) supporté par le bras mécanique articulé et de moyens (35, 36) pour évaluer l'impact entre l'outil de test (10) et la surface du tronçon d'élément (14) concerné par le contact.

2. Dispositif (1) selon la revendication 1, comprenant une base (2) à laquelle est relié un premier élément fixe (3) dudit bras mécanique articulé (4) qui comprend, en outre, à l'extrémité du premier élément (3) opposée à la base (2), une première articulation (5) reliée à un second élément tournant (6), lui-même équipé d'une seconde articulation (7) reliée à un troisième élément tournant (8).

3. Dispositif (1) selon les revendications 1 et 2, dans lequel lesdits moyens d'entraînement comprennent un premier actionneur asservi extensible (11), disposé entre le premier élément fixe (3) et le second élément tournant (6), et un second actionneur asservi extensible (12), disposé entre le second élément tournant (6) et le troisième élément tournant (8).

4. Dispositif (1) selon la revendication 3, dans lequel lesdits actionneurs (11, 12) sont du type à boucle fermée avec rétroaction sur la position.

5. Dispositif (1) selon la revendication 1, dans lequel ledit support comprend une table support tournante (13).

6. Dispositif (1) selon la revendication 5, dans lequel ledit tronçon de l'élément de test (14) est fixé sur la table support (13) au moyen d'une structure d'appui (17) de façon à fixer ledit élément en direction transversale et longitudinale.

7. Dispositif (1) selon la revendication 6, dans lequel ladite structure d'appui (17) est équipée d'éléments en U de dimensions sélectionnées dans le cas où l'élément de test (14) est constitué d'un tronçon de pipeline.

8. Dispositif (1) selon la revendication 6, dans lequel la structure d'appui (17) comprend des supports élastomères pour reproduire la contrainte d'appui.

9. Dispositif (1) selon la revendication 1, comprenant des moyens (15, 16) pour pressuriser l'élément structurel de test, en particulier un tronçon de pipeline (14).

10. Dispositif (1) selon la revendication 1, dans lequel on peut faire tourner ledit support (13) dans une position prédéterminée.

11. Dispositif (1) selon la revendication 1, comprenant une tête porte-outil percutante (9) supportant ledit outil de test (10), ladite tête percutante (9) étant dotée d'une tête porte-capteur (19) à laquelle l'outil de test (10) est physiquement fixé, qui comporte un capteur de force à trois composantes (32).

12. Dispositif (1) selon la revendication 1, comprenant une tête porte-outil percutante (9) supportant ledit outil de test (10), ladite tête percutante (9) étant montée à coulissement sur des guides et équipée d'ensembles de ressorts (20) afin de permettre le mouvement transversal de ladite tête percutante selon une règle pré-établie de déplacement de force en fonction des caractéristiques et du nombre de ressorts utilisés.

13. Dispositif (1) selon la revendication 1, comprenant une tête porte-outil percutante (9) supportant ledit outil de test (10), ladite tête percutante (9) comportant un ensemble de freins à patins coulissants à précharge réglable, réalisant ainsi une course initiale sans augmenter la force de réaction transversale.

14. Dispositif (1) selon la revendication 1, dans lequel l'outil de test (10) est choisi dans le groupe comprenant : dent de godet d'excavateur, foret de perforateur, fraiseuse, lame, ski ou roue pour train d'atterrissage d'hélicoptère, élément plein en forme de roche, élément amortisseur.

15. Dispositif (1) selon la revendication 1, dans lequel lesdits moyens de réglage (21) comprennent une unité de calcul (22), dans laquelle sont introduits les paramètres selon lesquels l'outil de test (10) doit se déplacer sur le plan du dispositif (1) et sont transformés en une fonction opérationnelle desdits moyens d'actionnement (11, 12).

16. Dispositif (1) selon les revendications 11 et 15, dans lequel ledit capteur forme une cellule de charge (32) capable de détecter, le long de trois directions, au moyen de capteurs dynamométriques, les paramètres d'impact de l'outil de test (10) qui sont transférés à une unité d'asservissement (26) afin d'afficher et d'enregistrer les forces et positions importantes pour le test en cours et afin de fournir des signaux de rétroaction pour simuler correctement la rigidité de l'élément impactant en limitant la force appliquée.

17. Dispositif (1) selon la revendication 1, dans lequel le moyen d'évaluation de l'impact entre l'outil de test (10) et la surface du tronçon de pipeline (14) concernée par l'impact comprend une caméra vidéo (35) positionnée à proximité du tronçon de pipeline (14) afin de pouvoir enregistrer l'impact.

18. Dispositif (1) selon la revendication 1, dans lequel le moyen d'évaluation de l'impact entre l'outil de test (10) et la surface de l'élément de test (14) concernée par l'impact comprend un dispositif de détection tridimensionnelle apte à enregistrer le profil de l'élément de test après l'impact selon l'une quelconque des revendications précédentes.

19. Procédé d'évaluation de la résistance à la formation de dommages mécaniques au moyen du dispositif selon les revendications 1 à 18, comprenant les étapes suivantes :
positionnement le long d'un axe (x) d'un tronçon d'un élément de test (14), garantissant une surface ayant une continuité superficielle;
rotation du tronçon de l'élément de test (14) autour d'un axe vertical (z) dans une plage comprise entre 0 et 180 degrés;
rotation de l'angle d'impact entre les outils de test (10) sur le tronçon de l'élément de test (14) entre 0 et 90 degrés; et
éventuel positionnement de l'outil de test (10) de façon désalignée de façon à réaliser des impacts sur des plans parallèles au plan d'agression verticalement à l'élément de test (14), plan contenant les actionneurs (11, 12) du dispositif.

20. Procédé selon la revendication 19, dans lequel la vitesse maximum de l'outil de test (10) est d'au moins 5 m/sec.

21. Procédé selon la revendication 19, dans lequel les quantités suivantes sont contrôlées :
trois composantes de force dans les trois directions;
deux positions des actionneurs (11, 12);
trois composantes de force dans le système de référence fixé par rapport au dispositif (1);
deux composantes de position sur le plan d'agression (x, z);
deux composantes de vitesse sur le plan d'agression (x, z); et
deux composantes d'accélération sur le plan d'agression (x, z).
